# EUROPÄISCHE PATENTSCHRIFT

(11) **EP 3 545 736 B1**
(45) Veröffentlichungstag und Bekanntmachung des Hinweises auf die Patenterteilung: **25.11.2020**
(21) Anmeldenummer: 18163949.3
(22) Anmeldetag: 26.03.2018
(51) Int. Cl.: A01B 33/12, A01B 35/32

(54) **BODENBEARBEITUNGSMASCHINE**
SOIL PROCESSING MACHINE
MACHINE DE TRAVAIL DU SOL

(43) Veröffentlichungstag der Anmeldung: 02.10.2019
(73) Patentinhaber: Kverneland AS, 4353 Klepp St. (NO)
(72) Erfinder: Neumann, Björn, 59510 Lippetal (DE)
(74) Vertreter: Bittner, Thomas L.

(56) Entgegenhaltungen:
- DE-A1- 3 440 765
- DE-A1- 3 930 683
- DE-A1-102015 100 881
- DE-U1-202004 007 238
- DE-U1-202007 006 919

## Beschreibung

Die Erfindung betrifft eine Bodenbearbeitungsmaschine.

### Hintergrund

Eine Bodenbearbeitungsmaschine ist beispielsweise aus dem Dokument DE 20 2007 006 919 U1 bekannt. Die bekannte Bodenbearbeitungsmaschine, welche zum Beispiel eine Drillmaschine ist, weist zumindest zwei in Fahrtrichtung hintereinander angeordnete Werkzeugreihen mit Bodenbearbeitungswerkzeugen zur Bodenbearbeitung auf, die jeweils um eine liegende, quer zur Fahrtrichtung verlaufende Schwenkachse schwenkbar aufgehängt und mittels Schwenken um die genannten Schwenkachsen aushebbar und / oder in der Tiefe justierbar sind. Es ist zumindest ein seitlich neben den Werkzeugreihen angeordnetes Seitenschild vorgesehen, der mittels zumindest zweier schwenkbar gelagerter, parallelogrammartig angeordneter Seitenschildlenker höhenveränderlich aufgehängt ist. Die beiden Seitenschildlenker sind an einer jeweils anderen der Schwenkachsen der Werkzeugreihen derart angelenkt, dass beim Ausheben und / oder Tiefenjustieren der Werkzeugreihen mittels Schwenken um die Schwenkachsen die Seitenschildlenker mitverschwenkt werden und der Seitenschild mit ausgehoben und / oder mitjustiert wird.

Aus dem Dokument DE 32 01 821 A1 ist eine Bodenbearbeitungsmaschine bekannt, die Werkzeugträger mit einer sich quer zur Fahrtrichtung erstreckenden Reihe nebeneinander an einem Gestell um aufrechte Achsen drehbar angeordneten mit Bodenbearbeitungswerkzeugen sowie aufrechte und zumindest annähernd in Fahrtrichtung verlaufende Abschirmelementen aufweist, die jeweils seitlich neben den äußeren Werkzeugträgern zur Begrenzung der von den Werkzeugträgern seitlich nach außen bewegten Bodenteile in der Höhe bewegbar und seitlich ausweichbar angeordnet sind. Die Abschirmelemente sind zumindest über einen Lenker mit dem Gestell verbunden. Die Abschirmelemente bestehen jeweils aus zumindest einem einen kreisförmigen Umfang aufweisenden Element und einer Platte, die in Fahrtrichtung gesehen hinter dem Element mit dem kreisförmigen Umfang angeordnet ist, wobei das Element mit dem kreisförmigen Umfang drehbar angeordnet ist.

In Dokument DE 10 2015 100 881 A1 ist eine Bodenbearbeitungsmaschine beschrieben, beispielsweise in Form einer Kreiselegge oder eines Kreiselgrubbers. Die Bodenbearbeitungsmaschine weist am Rahmen angeordnete und höhenbewegbare Seitenschilde auf, wobei die Seitenschilde mittels in Richtung Maschinenmitte ragender Seitenschildarme mittels Gelenken, deren jeweilige Schwenkachse in Fahrtrichtung weisen, am Rahmen der Bodenbearbeitungsmaschine in Höhenrichtung bewegbar angelenkt sind. Um die Anpassung der Höhenlage der Seitenschilde an die Arbeitstiefe der Bodenbearbeitungszinken bei deren Verstellung durch Höhenverstellung der Nachlaufwalze wesentlich zu vereinfachen, ist vorgesehen, dass zwischen den jeweiligen Tragarmen der Nachlaufwalze und dem jeweiligen Seitenschildarm jeweils eine Betätigungsvorrichtung zur Höhenverstellung des zugeordneten Seitenschildes angeordnet ist.

### Zusammenfassung

Aufgabe der Erfindung ist es, eine Bodenbearbeitungsmaschine anzugeben, bei der ein dem oder den Werkzeugen zugeordnetes Seitenschild mit verbesserten Funktionseigenschaften ausgestattet ist.

Zur Lösung ist eine Bodenbearbeitungsmaschine nach dem unabhängigen Anspruch 1 geschaffen. Ausgestaltungsvarianten sind Gegenstand von abhängigen Unteransprüchen.

Nach einem Aspekt ist eine Bodenbearbeitungsmaschine mit einem Rahmen und einem Werkzeug zur Bodenbearbeitung geschaffen. Das Werkzeug ist um eine sich quer zur Fahrtrichtung erstreckende Schwenkachse relativ zum Rahmen zwischen einer Arbeitsstellung, in welcher das Werkzeug zur Bodenbearbeitung zum Boden hin abgesenkt ist, und einer Nicht-Arbeitsstellung schwenkbar, in welcher das Werkzeug vom Boden weg angehoben. Es ist eine Schutz- oder Schildeinrichtung mit einem Seitenschild vorgesehen, welches in einer Richtung quer zur Fahrtrichtung seitlich des Werkzeugs angeordnet ist, zumindest dann, wenn das Werkzeug in der Arbeitsstellung angeordnet ist. Der Schutzeinrichtung ist eine Betätigungseinrichtung zugeordnet, welche eingerichtet ist, beim Verlagern des Werkzeugs zwischen der Arbeitsstellung und der Nicht-Arbeitsstellung das Seitenschild relativ zum Rahmen zwischen einer ersten Stellung, in welcher das Seitenschild zum Boden hin abgesenkt ist, und einer zweiten Stellung zwangsweise zu verlagern, in welcher das Seitenschild vom Boden weg angehoben ist. Die Betätigungseinrichtung weist ein schwenkachsenseitiges Betätigungsbauteil, welches an die Schwenkachse koppelt, und ein seitenschildseitiges Betätigungsbauteil auf, welches an das Seitenschild koppelt. Das schwenkachsenseitige und das seitenschildseitige Betätigungsbauteil sind voneinander entkoppelt, wenn das Seitenschild in der ersten Stellung angeordnet ist. Schwenkachsenseitiges und seitenschildseitiges Betätigungsbauteil koppeln miteinander, um das Seitenschild zwangsweise aus der ersten in die zweite Stellung zu verlagern.

Aufgrund der Entkopplung von schwenkachsenseitigem und seitenschildseitigem Betätigungsbauteil, insbesondere derart, dass die Betätigungsbauteile voneinander mechanisch getrennt sind, können sich die Betätigungsbauteile unabhängig voneinander verlagern oder bewegen, ohne, dass das zugeordnete andere Betätigungsbauteil eine solche Verlagerung ebenfalls ausführen muss. Hierdurch ist zum Beispiel Reibung des seitenschildseitigen und des schwenkachsenseitigen Betätigungsbauteils aufeinander vermieden. Beispielsweise kann das Seitenschild, wenn es in der ersten Stellung angeordnet ist, Verlagerungen oder Bewegungen in begrenztem Umfang ausführen, ohne, dass es hierbei zur Reibung zwischen dem seitenschildseitigen und dem schwenkachsenseitigen Betätigungsbauteil kommt. Ein hierdurch verursachter Verschleiß ist vermieden.

Das Seiten- oder Schutzschild ist eingerichtet, Erd- oder Bodenmaterial, welches im Betrieb von dem oder den Werkzeugen zur Seite hin aufgeworfen wird, entgegen zu wirken, insbesondere um einen Aufbau von seitlichen Erdwällen zu vermeiden.

Das Seitenschild kann aus der ersten Stellung gegen eine Vorspannkraft in eine Ausweichstellung verlagerbar sein, derart, dass das Seitenschild nach einer vorübergehenden Verlagerung in die Ausweichstellung aufgrund der Vorspannkraft selbsttätig in die erste Stellung zurückkehrt. Eine Verlagerung oder Auslenkung in die Ausweichstellung kann beispielsweise durch ein Hindernis verursacht sein, gegen welches das Seitenschild bei der Bodenbearbeitung stößt. Auch Bodenunebenheiten können ein solches Auslenken in die Ausweichstellung verursachen. Die Vorspannkraft kann als elastische Vorspannkraft bereitgestellt sein, beispielsweise mithilfe eines Federmechanismus, zum Beispiel mittels einer oder mehrerer Federn wie Spiralfedern. Alternativ oder ergänzend kann die Vorspannkraft mittels eines hydraulischen und / oder eines pneumatischen feder- / Dämpfungsmechanismus bereitgestellt sein.

Das Seitenschild kann aus der ersten Stellung in einer ersten Verlagerungsrichtung quer zur Fahrtrichtung in eine erste Ausweichstellung verlagerbar sein. Auf diese Weise kann das Seitenschild quer zur Fahrtrichtung in seitlicher Richtung von dem Werkzeug weg bewegt werden, beispielsweise aufgrund eines Hindernisses oder einer Bodenunebenheit. Die Vorspannkraft sorgt dafür, dass das Seitenschild nach dem Passieren des Hindernisses oder der Bodenunebenheit selbsttätig in die erste Stellung zurückkehrt.

Das Seitenschild kann an einem Federbauteil angeordnet oder aufgenommen sein, welches eine Federspannkraft gegen die Verlagerung des Seitenschilds in der ersten Verlagerungsrichtung quer zur Fahrtrichtung in die erste Ausweichstellung bereitstellt. Das oder die Federbauteile können zum Beispiel mit einer ein- oder einer mehrlagigen Blattfeder gebildet sein. Die Blattfeder kann einen gekrümmten oder gebogenen Abschnitt aufweisen, der beispielsweise nach außen von dem Werkzeug weg quer zur Fahrtrichtung gewölbt ist.

Das Seitenschild kann aus der ersten Stellung in einer zweiten Verlagerungsrichtung in Fahrtrichtung in eine zweite Ausweichstellung verlagerbar sein. Die Vorspannung gegen das Verlagern in die zweite Ausweichstellung kann zum Beispiel mithilfe einer Spiralfeder bereitgestellt sein. Die Verlagerung in die zweite Ausweichstellung kann mittels einer Schwenkbewegung des Seitenschilds nach hinten entgegen der Fahrtrichtung erfolgen. Hierzu kann das Seitenschild um eine oder mehrere quer zur Fahrtrichtung verlaufende Schwenkachsen verlagerbar angeordnet sein.

Das schwenkachsenseitige und das seitenschildseitige Betätigungsbauteil können voneinander entkoppelt sein, wenn das Seitenschild in der Ausweichstellung angeordnet ist. Bei dieser Ausführungsform bleibt die Entkopplung zwischen dem schwenkachsenseitigen und dem seitenschildseitigen Betätigungsbauteil während der Verlagerung aus der ersten Stellung des Seitenschilds in die Ausweichstellung und in der Ausweichstellung selbst erhalten. Das Bewegen des Seitenschilds in die Ausweichstellung erfolgt daher ohne dass seitenschildseitiges und schwenkachsenseitiges Betätigungsbauteil miteinander koppeln, insbesondere so, dass die Betätigungsbauteile hierbei nicht miteinander in Berührung kommen, wodurch Reibung zwischen den Betätigungsbauteilen vermieden ist. Insbesondere die zweite Ausweichstellung des Seitenschilds kann eine Zwischenstellung auf dem Weg der Verlagerung des Seitenschilds zwischen der ersten und der zweiten Stellung sein.

Das schwenkachsenseitige Betätigungsbauteil kann beim Verlagern des Werkzeugs aus der Arbeitsstellung in die Nicht-Arbeitsstellung entlang eines anfänglichen Verlagerungswegs verlagerbar sein, auf dem das schwenkachsenseitige Betätigungsbauteil frei von einer Kopplung an das seitenschildseitige Betätigungsbauteil ist. Beim Verlagern des Werkzeugs aus der Arbeitsstellung in die Nicht-Arbeitsstellung wird das Seitenschild zwangsweise aus der ersten in die zweite Stellung überführt. Hierbei wird das schwenkachsenseitige Betätigungsbauteil entlang des anfänglichen Verlagerungswegs bewegt, ohne dass es schon mit dem seitenschildseitigen Betätigungsbauteil zum Eingriff kommt. Hierdurch wird im Betrieb der Bodenbearbeitungsmaschine auch ermöglicht, dass das Werkzeug, zum Beispiel aufgrund von Bodenunebenheiten, um die Schwenkachse verschwenkt wird, ohne dass diese betriebsbedingte Schwenkbewegung, die nicht dem Überführen in die Nicht-Arbeitsstellung dient, schon zu einem Eingriff zwischen dem schwenkachsenseitigen und dem seitenschildseitigen Betätigungsbauteil führt. Erst nachdem der anfängliche Verlagerungsweg durchlaufen ist, koppeln schwenkachsenseitiges und seitenschildseitiges Betätigungsbauteil, kommen also zum gegenseitigen Eingriff, um so dann das Seitenschild in die zweite Stellung zu verlagern, in welcher das Seitenschild vom Boden weg angehoben oder ausgehoben ist. Das Seitenschild folgt so dem Verlagern des Werkzeugs in die Nicht-Arbeitsstellung.

Das schwenkachsenseitige Betätigungsbauteil kann beim Verlagern des Werkzeugs aus der Arbeitsstellung in die Nicht-Arbeitsstellung entlang eines anschließenden Verlagerungswegs verlagerbar sein, welcher sich an den anfänglichen Verlagerungsweg anschließt und auf dem das schwenkachsenseitige Betätigungsbauteil an das seitenschildseitige Betätigungsbauteil koppelt. Gemäß dieser Ausführungsform schließt an den anfänglichen Verlagerungsweg, in welchem schwenkachsenseitiges und seitenschildseitiges Betätigungsbauteil voneinander entkoppelt sind, der anschließende Verlagerungsweg an, in welchem die Zwangsführung des Seitenschilds aus der ersten in die zweite Stellung vollzogen wird.

Das Seitenschild kann an einem Parallelogramm-Gelenk aufgenommen sein. Das Parallelogramm-Gelenk kann mit zwei Schildlenkern ausgebildet sein, die in einer Ausführungsform mit oder von Federbauteilen gebildet sind, welche die Vorspannkraft für die Verlagerung des Seitenschilds quer zur Fahrtrichtung bereitstellen. Die Schildlenker sind bei dieser Ausgestaltung multifunktionell, einerseits bezüglich des Verlagerns und Verschwenkens des Seitenschilds und andererseits bezüglich des Bereitstellens der Vorspannkraft für das Verlagern des Seitenschilds in die erste Ausweichstellung von dem Werkzeug weg und / oder zum Werkzeug hin quer zur Fahrtrichtung. Allgemein können die Federbauteile ein Verlagern des Seitenschilds quer zur Fahrtrichtung hin sowie auch weg vom Werkzeug erlauben.

Das schwenkachsenseitige Betätigungsbauteil kann einen gekrümmten Führungsabschnitt aufweisen, welcher beim Koppeln mit einem Fangbauteil des seitenschildseitigen Betätigungsbauteils zum Eingriff kommt, derart, dass das Fangbauteil nach dem Koppeln entlang des gekrümmten Führungsabschnitts geführt wird. Das schwenkachsenseitige Betätigungsbauteil kann einen Nocken aufweisen, welcher einer Fangrolle des seitenschildseitigen Betätigungsbauteils zugeordnet ist, sodass Nocken und Fangrolle beim Koppeln von schwenkachsenseitigem Betätigungsbauteil und seitenschildseitigem Betätigungsteil zum Eingriff kommen.

Das schwenkachsenseitige Betätigungsbauteil kann mit einem Schwenkbauteil starr verbunden sein, welches beim Verlagern des Werkzeugs zwischen der Arbeitsstellung und der Nicht-Arbeitsstellung um die Schwenkachse drehbar ist. Das schwenkachsenseitige Betätigungsbauteil kann mit einem Hebelarm starr an das um die Schwenkachse drehbare Schwenkbauteil koppeln. An dem Hebelarm kann der Nocken des schwenkachsenseitigen Betätigungsbauteils gebildet sein.

Das Werkzeug kann in einer sich quer zur Fahrtrichtung erstreckenden Werkzeugreihe mit einer Anordnung von Werkzeugen angeordnet sein, die mittels Verlagern der Werkzeugreihe gemeinsam zwischen der Arbeitsstellung und der Nicht-Arbeitsstellung verlagerbar sind. Bei dieser oder anderen Ausführungsformen kann das Werkzeug oder Arbeitswerkzeug ein Werkzeug aus der folgenden Gruppe sein: Schneidscheibe, Kreiselegge, Zinken wie Grubberzinken, Kreiselgrubberzinken oder Kreiseleggenzinken, und Hohlscheibe.

Das Seitenschild kann einen in Fahrtrichtung rückseitig angeordneten Leitschildabschnitt aufweisen, welcher zum Werkzeug hin abgewinkelt und eingerichtet ist, vom Werkzeug bei der Bodenbearbeitung aufgeworfenes Material innerhalb einer Arbeitsbreite zurückzuhalten. Allgemein ist das Seitenschild eingerichtet, Erd- oder Bodenmaterial, welches im Betrieb von dem oder den Werkzeugen in seitliche Richtung aufgeworfen wird, zurückzuhalten. Mittels des Leitschildabschnitts wird erreicht, dass das Erd- oder Bodenmaterial innerhalb der Arbeitsbreite verbleibt oder in diese zurückgeführt wird. Der abgewinkelte Leitschildabschnitt kann hierbei wenigstens abschnittsweise in Fahrtrichtung hinter dem Werkzeug angeordnet sein, um so eine Begrenzung auf die Arbeitsbreite möglichst effizient auszubilden.

Eine Arbeitstiefe für das Seitenschild kann einstellbar sein. Zum Einstellen der Arbeitstiefe des Seitenschilds, also dessen Höhe über dem Boden, kann an dem Seitenschild ein Verstellmechanismus vorgesehen sein, beispielsweise eine schwenkbare Lagerung des Seitenschilds an den Schildlenkern, derart, dass zwischen Schildlenkern und Seitenschild verschiedene fixierbare Schwenkstellungen eingestellt werden können, mit denen die Höhe des unteren Rands des Seitenschilds über dem Boden verändert wird, wenn das Seitenschild in der ersten (abgesenkten) Stellung angeordnet ist. Hierzu können am Seitenschild mehrere Bohrungen oder Öffnungen vorgesehen sein, in die ein zugeordnetes Stiftelement lösbar eingesteckt ist, um eine jeweilige Schwenkstellung einzustellen.

Die Bodenbearbeitungsmaschine kann aus der folgenden Gruppe von Bodenbearbeitungsmaschinen ausgewählt sein: Sämaschine, Scheibenegge, Kultivator (Grubber), Kreiselegge und Kreiselgrubber.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer als Egge ausgeführten Bodenbearbeitungsmaschine;
- Fig. 2: eine schematische perspektivische Darstellung eines Abschnitts der Bodenbearbeitungsmaschine aus Fig. 1;
- Fig. 3: eine schematische perspektivische Darstellung des Abschnitts der Bodenbearbeitungsmaschine aus Fig. 1, wobei das Seitenschild aus einer ersten in eine zweite Stellung verlagert wird;
- Fig. 4: eine schematische perspektivische Darstellung des Abschnitts der Bodenbearbeitungsmaschine aus Fig. 1, wobei das Seitenschild aus in der zweiten Stellung angeordnet ist; und
- Fig. 5: eine schematische perspektivische Darstellung des Abschnitts der Bodenbearbeitungsmaschine aus Fig. 1, wobei das Seitenschild wegen eines Hindernisses in eine Ausweichstellung verlagert ist.

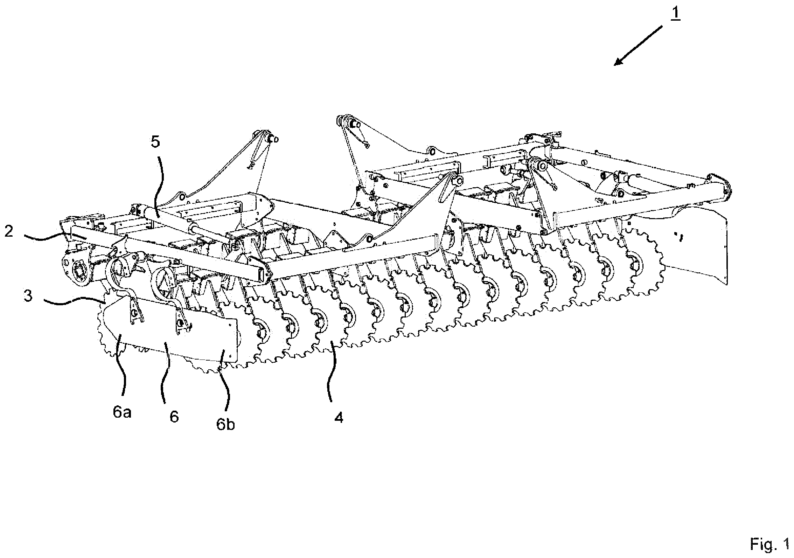

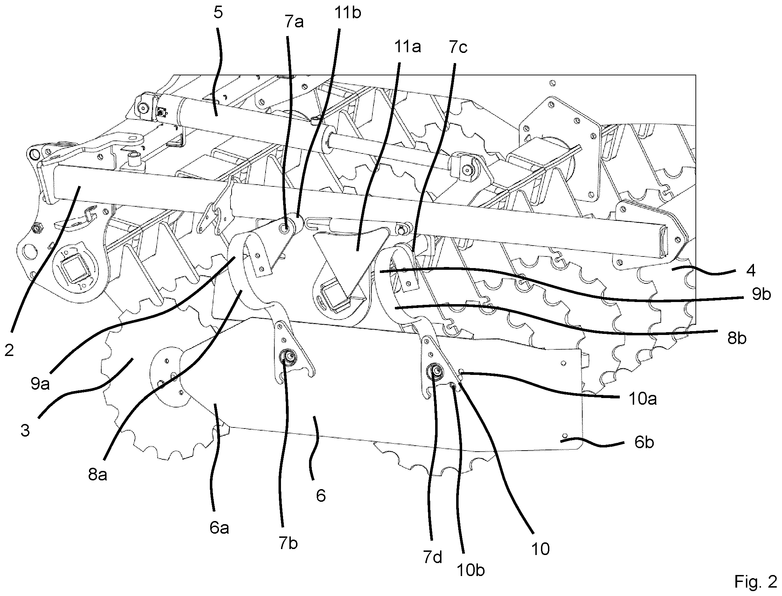

Fig. 1 und 2 zeigen schematische perspektivische Darstellungen einer als Egge ausgeführten Bodenbearbeitungsmaschine 1 mit einem Rahmen 2 an dem Werkzeugreihen 3, 4 schwenkbar aufgenommen sind, derart, dass die Werkzeugreihen 3, 4 zwischen einer Arbeitsstellung, die in den Fig. 1 und 2 gezeigt ist, und einer Nicht-Arbeitsstellung verschwenkbar sind, in welcher die Werkzeugreihen 3, 4 vom Boden ausgehoben sind. Zum Verschwenken zwischen der Arbeitsstellung und der Nicht-Arbeitsstellung ist bei der gezeigten Ausführungsform ein Hydraulikzylinder 5 vorgesehen, der in den Fig. 1 und 2 in der ausgefahrenen Stellung gezeigt ist.

Seitlich der Werkzeugreihe 4 ist ein Seitenschild 6 vorgesehen, welches mithilfe eines Parallelogramm-Gelenks 7 verschwenk- und verlagerbar befestigt ist. Das Parallelogramm-Gelenk 7 weist Drehpunkte 7a, ..., 7d auf, an die zugeordnete Schildlenker 8a, 8b koppeln. Die Schildlenker 8a, 8b sind bei der gezeigten Ausführungsform mit einem jeweiligen Blattfederbauteil 9a, 9b gebildet, welches das Seitenschild 6 gegen eine Verlagerung quer zur Fahrtrichtung vorspannt. Eine solche Verlagerung zu den Werkzeugreihen 3, 4 hin oder von diesen weg ist mithilfe der Blattfederelemente 9a, 9b ermöglicht. Eine dahingehende Verlagerung kann durch Bodenunebenheiten und / oder ein Hindernis im Betrieb verursacht sein. Mithilfe der von den Blattfederbauteilen 9a, 9b bereitgestellten Federkraft kehrt das Seitenschild 6 dann selbsttätig aus der Verlagerungsstellung in die in Fig. 1 und 2 gezeigte Ausgangsstellung zurück.

Das Seitenschild 6 weist einen Verstellmechanismus 10 mit Öffnungen 10a und einem Stift 10b auf, mit dem eine Arbeitstiefe oder -höhe des Seitenschilds 6 eingestellt werden kann.

Das Seitenschild 6 weist einen vorderen Abschnitt 6a auf, welcher im Wesentlichen parallel zur Fahrtrichtung verläuft. Hierzu abgewinkelt ist ein Leitschildabschnitt 6b, der in Fahrrichtung hinten angeordnete und nach innen abgewinkelt ist. Mithilfe des Leitschildabschnitts 6b kann Erd- oder Bodenmaterial was im Betrieb von den Werkzeugreihen 3, 4 zur Seite gegen das Seitenschild 6 geworfen wird, auf die Arbeitsbreite der Bodenbearbeitungsmaschine 1 zurückgeführt werden.

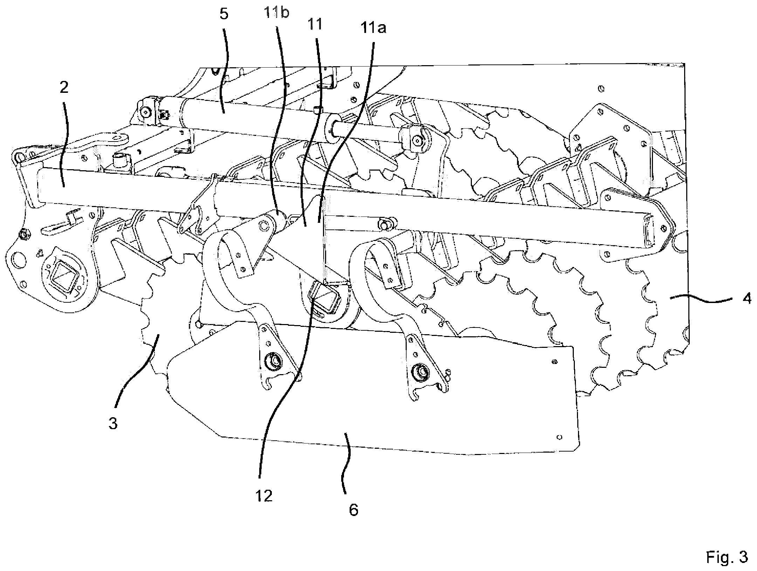

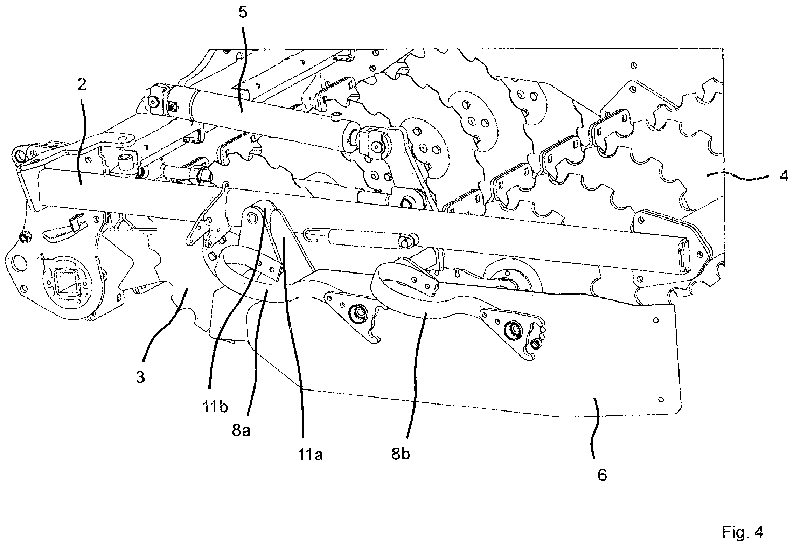

Es ist ein Betätigungsmechanismus 11 vorgesehen (vgl. insbesondere Fig. 3 bis 5), der mit einem Betätigungsnocken 11a und einer Fangrolle 11b gebildet ist. Der Betätigungsnocken 11a ist starr mit einem Schwenkbauteil 12 verbunden, welches um eine Schwenkachse quer zur Fahrtrichtung gedreht wird, wenn die Werkzeugreihe 4 zwischen der in den Fig. 1 und 2 gezeigten Arbeitsstellung und einer Nicht-Arbeitsstellung (vgl. Fig. 4) geschwenkt wird. Bei dieser Schwenkbewegung wird dann der Betätigungsnocken 11a in Richtung der Fangrolle 11b geschwenkt und kommt mit dieser gemäß Fig. 3 auf dem Verlagerungsweg zum Eingriff, derart, dass dann das Seitenschild 6 mittels Schwenken an dem Parallelogramm-Gelenk 7 ausgehoben wird in eine zweite Stellung, die in Fig. 4 gezeigt ist. Fig. 3 zeigt das Seitenschild 6 auf dem Weg zwischen der ersten Stellung aus den Fig. 1 und 2 und der zweiten Stellung in Fig. 4. Hierbei schwenken die als Schildlenker dienenden Blattfederelemente 9a, 9b und das Seitenschild 6 um jeweilige Drehpunkte 7a, ..., 7d.

Gemäß der Darstellung in Fig. 2 sind die Bauteile des Betätigungsmechanismus 11, nämlich der Betätigungsnocken 11a und die Fangrolle 11b, voneinander getrennt und (mechanisch) entkoppelt, wenn das Seitenschild 6 in der ersten (abgesenkten) Stellung angeordnet ist.

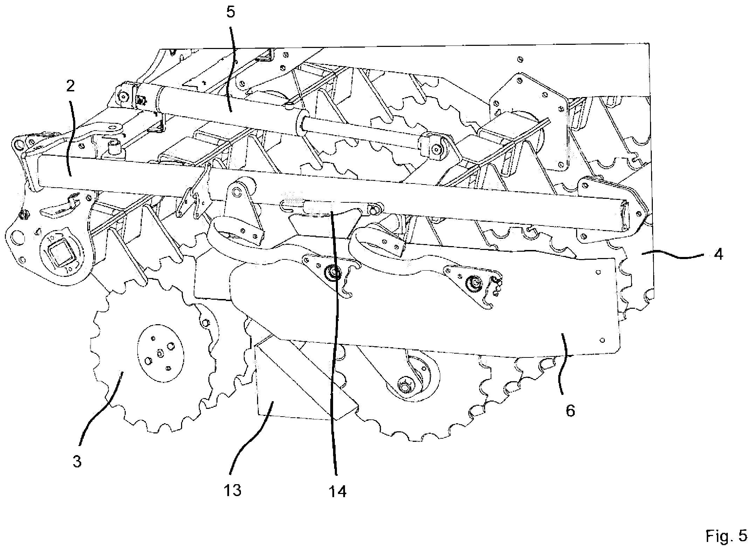

Das Seitenschild 6 kann im Betrieb aus der in den Fig. 1 und 2 gezeigten ersten Stellung ausgelenkt werden in einer Ausweichstellung (vgl. Fig. 5), ohne, dass Betätigungsnocken 11a und Fangrolle 11b zum Eingriff kommen, wodurch auch ein Ausweichen bei einem Hindernis 13 oder Bodenunebenheiten ermöglicht ist. Gegen ein solches Verschwenken ist das Seitenschild 6 mithilfe einer Feder 14 vorgespannt. Beim Ausweichen erfolgt eine Drehung in den Drehpunkten 7a, ..., 7d. In der Ausweichstellung sind Betätigungsnocken 11a und Fangrolle 11b voneinander entkoppelt.

Das Seitenschild 6 kann im Betrieb also sowohl in Fahrtrichtung wie auch quer hierzu in unterschiedliche Ausweichstellungen verlagert werden, aus denen das Seitenschild dann aufgrund der Vorspannkräfte in die erste Stellung nach Fig. 1 selbsttätig zurückkehrt.

Wenn die Werkzeugreihe 4 in die Nicht-Arbeitsstellung ausgehoben ist, ist der Hydraulikzylinder 5 eingefahren, wie dies Fig. 4 zeigt.

## Patentansprüche

1. Bodenbearbeitungsmaschine (1), mit:
- einem Rahmen (2);
- einem Werkzeug zur Bodenbearbeitung, welches um eine sich quer zur Fahrtrichtung erstreckende Schwenkachse relativ zum Rahmen (2) zwischen einer Arbeitsstellung, in welcher das Werkzeug zur Bodenbearbeitung zum Boden hin abgesenkt ist, und einer Nicht-Arbeitsstellung schwenkbar ist, in welcher das Werkzeug vom Boden weg angehoben ist;
- einer Schutzeinrichtung, die ein Seitenschild (6) aufweist, welches in einer Richtung quer zur Fahrtrichtung seitlich des Werkzeugs angeordnet ist, zumindest dann, wenn das Werkzeug in der Arbeitsstellung angeordnet ist; und
- einer Betätigungseinrichtung (11), die der Schutzeinrichtung zugeordnet und eingerichtet ist, beim Verlagern des Werkzeugs zwischen der Arbeitsstellung und der Nicht-Arbeitsstellung das Seitenschild (6) relativ zum Rahmen zwischen einer ersten Stellung, in welcher das Seitenschild (6) zum Boden hin abgesenkt ist, und einer zweiten Stellung zwangsweise zu verlagern, in welcher das Seitenschild (6) vom Boden weg angehoben ist;
**dadurch gekennzeichnet, dass**
- die Betätigungseinrichtung (11) ein schwenkachsenseitiges Betätigungsbauteil (11a), welches an die Schwenkachse koppelt, und ein seitenschildseitiges Betätigungsbauteil (11b) aufweist, welches an das Seitenschild (6) koppelt; und
- das schwenkachsenseitige und das seitenschildseitige Betätigungsbauteil (11a, 11b) voneinander entkoppelt sind, wenn das Seitenschild (6) in der ersten Stellung angeordnet ist, und miteinander koppeln, um das Seitenschild (6) zwangsweise aus der ersten in die zweite Stellung zu verlagern.

2. Bodenbearbeitungsmaschine (1) nach Anspruch 1, **dadurch gekennzeichnet, dass** das Seitenschild (6) aus der ersten Stellung gegen eine Vorspannkraft in eine Ausweichstellung verlagerbar ist, derart, dass das Seitenschild (6) nach einer vorübergehenden Verlagerung in die Ausweichstellung aufgrund der Vorspannkraft selbsttätig in die erste Stellung zurückkehrt.

3. Bodenbearbeitungsmaschine (1) nach Anspruch 2, **dadurch gekennzeichnet, dass** das Seitenschild (6) aus der ersten Stellung in einer ersten Verlagerungsrichtung quer zur Fahrtrichtung in eine erste Ausweichstellung verlagerbar ist.

4. Bodenbearbeitungsmaschine (1) nach Anspruch 3, **dadurch gekennzeichnet, dass** das Seitenschild (6) an einem Federbauteil angeordnet ist, welches eine Federspannkraft gegen die Verlagerung des Seitenschildes (6) in der ersten Verlagerungsrichtung quer zur Fahrtrichtung in die erste Ausweichstellung bereitstellt.

5. Bodenbearbeitungsmaschine (1) nach mindestens einem der Ansprüche 2 bis 4, **dadurch gekennzeichnet, dass** das Seitenschild (6) aus der ersten Stellung in einer zweiten Verlagerungsrichtung in Fahrtrichtung in eine zweite Ausweichstellung verlagerbar ist.

6. Bodenbearbeitungsmaschine (1) nach mindestens einem der Ansprüche 2 bis 5, **dadurch gekennzeichnet, dass** das schwenkachsenseitige und das seitenschildseitige Betätigungsbauteil (11a, 11b) voneinander entkoppelt sind, wenn das Seitenschild (6) in der Ausweichstellung angeordnet ist.

7. Bodenbearbeitungsmaschine (1) nach mindestens einem der vorangehenden Ansprüche, **dadurch gekennzeichnet, dass** das schwenkachsenseitige Betätigungsbauteil (11a) beim Verlagern des Werkzeugs aus der Arbeitsstellung in die Nicht-Arbeitsstellung entlang eines anfänglichen Verlagerungswegs verlagerbar ist, auf dem das schwenkachsenseitige Betätigungsbauteil (11a) frei von einer Kopplung an das seitenschildseitige Betätigungsbauteil (11b) ist.

8. Bodenbearbeitungsmaschine (1) nach Anspruch 7, **dadurch gekennzeichnet, dass** das schwenkachsenseitige Betätigungsbauteil (11a) beim Verlagern des Werkzeugs aus der Arbeitsstellung in die Nicht-Arbeitsstellung entlang eines anschließenden Verlagerungswegs verlagerbar ist, welcher sich an den anfänglichen Verlagerungsweg anschließet und auf dem das schwenkachsenseitige Betätigungsbauteil (11a) an das seitenschildseitige Betätigungsbauteil (11b) koppelt.

9. Bodenbearbeitungsmaschine (1) nach mindestens einem der vorangehenden Ansprüche, **dadurch gekennzeichnet, dass** das Seitenschild (6) an einem Parallelogramm-Gelenk (7) aufgenommen ist.

10. Bodenbearbeitungsmaschine (1) nach mindestens einem der vorangehenden Ansprüche, **dadurch gekennzeichnet, dass** das schwenkachsenseitige Betätigungsbauteil (11a) einen gekrümmten Führungsabschnitt aufweist, welcher beim Koppeln mit einem Fangbauteil des seitenschildseitigen Betätigungsbauteils (11b) zum Eingriff kommt, derart, dass das Fangbauteil nach dem Koppeln entlang des gekrümmten Führungsabschnitts geführt wird.

11. Bodenbearbeitungsmaschine (1) nach mindestens einem der vorangehenden Ansprüche, **dadurch gekennzeichnet, dass** das schwenkachsenseitige Betätigungsbauteil (11a) mit einem Schwenkbauteil (12) starr verbunden ist, welches beim Verlagern des Werkzeugs zwischen der Arbeitsstellung und der Nicht-Arbeitsstellung um die Schwenkachse drehbar ist.

12. Bodenbearbeitungsmaschine (1) nach mindestens einem der vorangehenden Ansprüche, **dadurch gekennzeichnet, dass** das Werkzeug in einer sich quer zur Fahrtrichtung erstreckenden Werkzeugreihe (3; 4) mit einer Anordnung von Werkzeugen angeordnet ist, die mittels Verlagern der Werkzeugreihe (3; 4) gemeinsam zwischen der Arbeitsstellung und der Nicht-Arbeitsstellung verlagerbar sind.

13. Bodenbearbeitungsmaschine (1) nach mindestens einem der vorangehenden Ansprüche, **dadurch gekennzeichnet, dass** das Seitenschild (6) einen in Fahrtrichtung rückseitig angeordneten Leitschiidabschnitt (6b) aufweist, welcher zum Werkzeug hin abgewinkelt und eingerichtet ist, vom Werkzeug bei der Bodenbearbeitung aufgeworfenes Erdmaterial innerhalb einer Arbeitsbreite zurückzuhalten.

14. Bodenbearbeitungsmaschine (1) nach mindestens einem der vorangehenden Ansprüche, **dadurch gekennzeichnet, dass** eine Arbeitstiefe für das Seitenschild (6) einstellbar ist.

15. Bodenbearbeitungsmaschine (1) nach mindestens einem der vorangehenden Ansprüche, ausgewählt aus der folgenden Gruppe von Bodenbearbeitungsmaschinen: Sämaschine, Scheibenegge, Kultivator (Grubber), Kreiselegge und Kreiselgrubber.

## Claims

1. Soil cultivation machine (1), comprising:
- a frame (2);
- a tool for soil cultivation, which tool can be pivoted relative to the frame (2) about a pivot shaft extending transversely to the direction of travel between a working position, in which the tool for soil cultivation is lowered toward the ground, and a non-working position, in which the tool is lifted away from the ground;
- a protection device which has a lateral shield (6) which is arranged laterally to the tool in a direction transverse to the direction of travel, at least when the tool is arranged in the working position; and
- an actuation device (11) which is associated with the protection device and is configured, when the tool is moved between the working position and the non-working position, to forcibly move the lateral shield (6) relative to the frame between a first position, in which the lateral shield (6) is lowered toward the ground, and a second position, in which the lateral shield (6) is lifted away from the ground;
**characterized in that**
- the actuation device (11) has a pivot shaft-side actuation component (11a) which couples to the pivot shaft, and a lateral shield-side actuation component (11b) which couples to the lateral shield (6); and
- the pivot shaft-side and the lateral shield-side actuation component (11a, 11b) are decoupled from one another when the lateral shield (6) is arranged in the first position, and couple to one another in order to forcibly move the lateral shield (6) from the first into the second position.

2. Soil cultivation machine (1) according to claim 1, **characterized in that** the lateral shield (6) can be moved from the first position against a pretensioning force into an evasive position such that the lateral shield (6), after being temporarily moved into the evasive position, automatically returns into the first position as a result of the pretensioning force.

3. Soil cultivation machine (1) according to claim 2, **characterized in that** the lateral shield (6) can be moved from the first position in a first movement direction transverse to the direction of travel into a first evasive position.

4. Soil cultivation machine (1) according to claim 3, **characterized in that** the lateral shield (6) is arranged on a spring component which provides a spring tensioning force against the movement of the lateral shield (6) in the first movement direction transverse to the direction of travel into the first evasive position.

5. Soil cultivation machine (1) according to at least one of claims 2 to 4, **characterized in that** the lateral shield (6) can be moved from the first position in a second movement direction in the direction of travel into a second evasive position.

6. Soil cultivation machine (1) according to at least one of claims 2 to 5, **characterized in that** the pivot shaft-side and the lateral shield-side actuation component (11a, 11b) are decoupled from one another when the lateral shield (6) is arranged in the evasive position.

7. Soil cultivation machine (1) according to at least one of the preceding claims, **characterized in that** the pivot shaft-side actuation component (11a) can be moved along an initial movement path when the tool is moved from the working position into the non-working position, on which path the pivot shaft-side actuation component (11a) is free of a coupling to the lateral shield-side actuation component (11b).

8. Soil cultivation machine (1) according to claim 7, **characterized in that** the pivot shaft-side actuation component (11a) can be moved along a subsequent movement path when the tool is moved from the working position into the non-working position, which subsequent movement path adjoins the initial movement path and on which subsequent movement path the pivot shaft-side actuation component (11a) couples to the lateral shield-side actuation component (11b).

9. Soil cultivation machine (1) according to at least one of the preceding claims, **characterized in that** the lateral shield (6) is received on a parallelogram joint (7).

10. Soil cultivation machine (1) according to at least one of the preceding claims, **characterized in that** the pivot shaft-side actuation component (11a) has a curved guide portion which, during coupling, engages with a catch component of the lateral shield-side actuation component (11b) such that, after coupling, the catch component is guided along the curved guide portion.

11. Soil cultivation machine (1) according to at least one of the preceding claims, **characterized in that** the pivot shaft-side actuation component (11a) is rigidly connected to a pivot component (12) which can be rotated about the pivot shaft when the tool is moved between the working position and the non-working position.

12. Soil cultivation machine (1) according to at least one of the preceding claims, **characterized in that** the tool is arranged in a tool row (3; 4) which extends transversely to the direction of travel and comprises an arrangement of tools which, by means of moving the tool row (3; 4), can be moved together between the working position and the non-working position.

13. Soil cultivation machine (1) according to at least one of the preceding claims, **characterized in that** the lateral shield (6) has a guide shield portion (6b) which is arranged at the rear in the direction of travel and which is angled toward the tool and configured to retain soil material thrown up by the tool during soil cultivation within a working width.

14. Soil cultivation machine (1) according to at least one of the preceding claims, **characterized in that** a working depth for the lateral shield (6) can be adjusted.

15. Soil cultivation machine (1) according to at least one of the preceding claims, selected from the following group of soil cultivation machines: sowing machine, disc harrow, cultivator, rotary harrow and rotary cultivator.

## Revendications

1. Machine de travail du sol (1), comportant :
- un cadre (2) ;
- un outil de travail du sol qui peut pivoter autour d'un axe de pivotement s'étendant transversalement à la direction de marche par rapport au cadre (2) entre une position de travail dans laquelle l'outil de travail du sol est abaissé vers le sol et une position de non-travail dans laquelle l'outil est relevé du sol ;
- un dispositif de protection comprenant un bouclier latéral (6) disposé latéralement par rapport à l'outil dans une direction transversale à la direction de marche, au moins lorsque l'outil est en position de travail ; et
- un dispositif d'actionnement (11) associé au dispositif de protection et agencé, lorsque l'outil est déplacé entre la position de travail et la position de non-travail, pour déplacer de force le bouclier latéral (6) par rapport au cadre entre une première position dans laquelle le bouclier latéral (6) est abaissé vers le sol et une seconde position dans laquelle le bouclier latéral (6) est relevé du sol ;
**caractérisée en ce que**
- le dispositif d'actionnement (11) comporte un composant d'actionnement (11a) du côté de l'axe de pivotement, lequel composant d'actionnement s'accouple audit axe de pivotement, et un composant d'actionnement (11b) du côté du bouclier latéral, lequel composant d'actionnement s'accouple audit bouclier latéral (6) ; et **en ce que**
- les composants d'actionnement (11a, 11b) du côté de l'axe de pivotement et du côté du bouclier latéral sont découplés l'un de l'autre lorsque le bouclier latéral (6) est disposé dans la première position et s'accouplent l'un avec l'autre pour déplacer de force le bouclier latéral (6) de la première à la seconde position.

2. Machine de travail du sol (1) selon la revendication 1, **caractérisée en ce que** le bouclier latéral (6) peut se déplacer de la première position contre une force de précontrainte à une position de retrait, de telle manière que le bouclier latéral (6), après un déplacement temporaire dans la position de retrait, revienne automatiquement à la première position en raison de la force de précontrainte.

3. Machine de travail du sol (1) selon la revendication 2, **caractérisée en ce que** le bouclier latéral (6) peut se déplacer de la première inclinaison dans une première direction de déplacement transversalement à la direction de marche dans une première position de retrait.

4. Machine de travail du sol (1) selon la revendication 3, **caractérisée en ce que** le bouclier latéral (6) est disposé au niveau d'un composant à ressort qui fournit une force de tension de ressort contre le déplacement du bouclier latéral (6) dans la première direction de déplacement transversalement à la direction de marche dans la première position de retrait.

5. Machine de travail du sol (1) selon au moins l'une des revendications 2 à 4, **caractérisée en ce que** le bouclier latéral (6) peut être déplacé de la première position à une seconde direction de déplacement dans la direction de marche dans une seconde position de retrait.

6. Machine de travail du sol (1) selon au moins l'une des revendications 2 à 5, **caractérisée en ce que** les composants d'actionnement (11a, 11b) du côté de l'axe de pivotement et du côté du bouclier latéral sont découplés l'un de l'autre lorsque le bouclier latéral (6) est disposé dans la position de retrait.

7. Machine de travail du sol (1) selon au moins l'une des revendications précédentes, **caractérisée en ce que** le composant d'actionnement (11a) du côté de l'axe de pivotement, lorsque l'outil est déplacé de la position de travail à la position de non-travail, peut être déplacé le long d'un chemin de déplacement initial, sur lequel le composant d'actionnement (11a) du côté de l'axe de pivotement est exempt d'accouplement au composant d'actionnement (11b) du côté du bouclier latéral.

8. Machine de travail du sol (1) selon la revendication 7, **caractérisée en ce que** le composant d'actionnement (11a) du côté de l'axe de pivotement peut être déplacé le long d'un chemin de déplacement suivant lorsque l'outil est déplacé de la position de travail à la position de non-travail, lequel chemin de déplacement suivant suit le chemin de déplacement initial et sur lequel le composant d'actionnement (11a) du côté de l'axe de pivotement s'accouple à l'élément d'actionnement (11b) du côté du bouclier latéral.

9. Machine de travail du sol (1) selon au moins l'une des revendications précédentes, **caractérisée en ce que** le bouclier latéral (6) est reçu au niveau d'une articulation à parallélogramme (7).

10. Machine de travail du sol (1) selon au moins l'une des revendications précédentes, **caractérisée en ce que** le composant d'actionnement (11a) du côté de l'axe de pivotement comporte une section de guidage incurvée qui, lors de l'accouplement, vient en prise avec un composant de verrouillage du composant d'actionnement (11b) du côté du bouclier latéral de telle manière que le composant de verrouillage est guidé le long de la section de guidage incurvée après l'accouplement.

11. Machine de travail du sol (1) selon au moins l'une des revendications précédentes, **caractérisée en ce que** le composant d'actionnement (11a) du côté de l'axe de pivotement est relié rigidement à un composant de pivotement (12) qui peut tourner autour de l'axe de pivotement lorsque l'outil est déplacé entre la position de travail et la position de non-travail.

12. Machine de travail du sol (1) selon au moins l'une des revendications précédentes, **caractérisée en ce que** l'outil est disposé dans une rangée d'outils (3 ; 4) s'étendant transversalement à la direction de marche par rapport à une disposition d'outils, lesquels outils peuvent être déplacés ensemble entre la position de travail et la position de non-travail au moyen d'un déplacement de la rangée d'outils (3 ; 4).

13. Machine de travail du sol (1) selon au moins l'une des revendications précédentes, **caractérisée en ce que** le bouclier latéral (6) comporte une section de bouclier de directrice (6b) qui est disposée du côté arrière dans la direction de marche et qui est inclinée vers l'outil et qui est agencée pour retenir le matériau de terre soulevé par l'outil lors du travail du sol dans une largeur de travail.

14. Machine de travail du sol (1) selon au moins l'une des revendications précédentes, **caractérisée en ce qu'**une profondeur de travail du bouclier latéral (6) est réglable.

15. Machine de travail du sol (1) selon au moins l'une des revendications précédentes, choisi dans le groupe suivant de machines de travail du sol: semoir, herse à disques, cultivateur, herse rotative et cultivateur rotatif.
